# EUROPÄISCHE PATENTSCHRIFT

(11) **EP 1 748 534 B1**
(45) Veröffentlichungstag und Bekanntmachung des Hinweises auf die Patenterteilung: **10.08.2011**
(21) Anmeldenummer: 06011327.1
(22) Anmeldetag: 01.06.2006
(51) Int. Cl.: H02K 3/52

(54) **Stator eines Elektromotors mit Wicklungs-Verschaltungsanordnung**
Stator for electric motors having a winding interconnection assembly
Stator pour moteurs électriques comprenant un système d'interconnexion d'enroulement

(30) Priorität: 27.07.2005 DE 202005011721 U
(43) Veröffentlichungstag der Anmeldung: 31.01.2007
(73) Patentinhaber: ebm-papst Mulfingen GmbH & Co. KG, 74673 Mulfingen (DE)
(72) Erfinder: Hofmann, Walter, 74673 Mulfingen (DE); Schwarz, Jochen, 74214 Schöntal-Berlichingen (DE); Frei, Oliver, 74679 Weissbach (DE)
(74) Vertreter: Patentanwälte Dr. Solf & Zapf

(56) Entgegenhaltungen:
- EP-A- 1 372 250
- EP-A- 1 499 000
- WO-A-00/33442
- WO-A-01/91266
- WO-A-2004/042891
- DE-A1- 10 213 743
- DE-A1- 19 920 127
- DE-U1- 20 314 135
- JP-A- 2002 153 003
- US-A- 4 287 446
- US-A- 4 361 773
- US-A- 4 964 210
- US-A1- 2004 070 293
- US-A1- 2004 183 388

## Beschreibung

Die vorliegende Erfindung betrifft einen Stator eines Elektromotors, insbesondere eines Außenläufermotors, mit einer aus einer Anzahl von Statorspulen gebildeten ein- oder mehrsträngigen Statorwicklung und einer an einer Stirnseite des Stators angebrachten Verschaltungsanordnung mit über Leiterbrücken verbundenen, jeweils einem Wicklungsstrang zugeordneten Wicklungskontaktelementen, die als Wickelstützpunkte zwischen den Statorspulen die Statorwicklung kontaktieren.

Aus der DE 199 20 127 C2 ist eine Verschaltungsanordnung bekannt, die elektrisch gegeneinander isolierte Verbindungsleiter aufweist, aus denen Anschlussfortsätze abragend ausgebildet sind. Die Verbindungsleiter weisen einen unterschiedlichen Durchmesser auf und sind innerhalb eines von den Statorspulen begrenzten Raums konzentrisch durch eine Isolierschicht getrennt angeordnet. Nach Kontaktierung der Statorspulenenden werden diese in entsprechende, zur Isolation notwendige Aussparungen radial benachbarter Verbindungsleiter hineingebogen, um den Bauraum zu minimieren.

Die DE 198 12 019 A1 weist ebenfalls konzentrisch zu der Motorachse angeordnete Stromschienen auf, die aber mit starren radial nach innen weisenden Laschen zur Kontaktierung der Wicklungsanschlüsse versehen sind. Um Kreuzungspunkte zwischen den Laschen und den Stromschienen zu vermeiden, sind die Laschen in vertieften Führungen unter benachbarten Stromschienen angeordnet.

In beiden vorbenannten Druckschriften wird bei der Kontaktierung der Statorspulen von freien Wicklungsenden nicht zusammenhängend gewickelter Spulen ausgegangen. Der Wickelvorgang kann aber erheblich vereinfacht werden, wenn die Wicklungskontaktelemente der Verbindungsleiter bzw. der Stromschienen als Wickelstützpunkte derart ausgeführt sind, dass die Statorbewicklung in einem kontinuierlichen Wickelvorgang verläuft, bei dem der Wickeldraht ohne Auftrennen zwischen der Bewicklung der Statorzähne über die Wicklungskontaktelemente geführt wird.

Eine Verschaltungsanordnung, die diese Wickeltechnik erlaubt, ist in der DE 102 13 743 A1 offenbart. Die Leiterbrücken sind auf einer Stirnseite des Stators axial nebeneinander angeordnet und kontaktieren über radial nach außen weisende Stege separate, als Wickelstützpunkte ausgeführte Wicklungskontaktelemente. Durch die radial nach außen verlaufenden Stege beansprucht diese Verschaltungsanordnung relativ viel Bauraum in radialer Richtung. Zudem sind die Wicklungskontaktelemente als separate Teile ausgeführt, was den Fertigungsablauf komplex gestaltet und zudem den Teileumfang erweitert. JP 2002 153 003 offenbart eine Verschaltungsanordnung.

Der vorliegenden Erfindung liegt die Aufgabe zu Grunde, einen Stator derart weiterzuentwickeln, dass gegenüber dem Stand der Technik fertigungstechnische Vorteile erzielt werden können. Insbesondere sollen die Herstellungskosten des Stators durch automatisierte Prozesse und eine Einschränkung der Teilevielfalt gesenkt werden. Weiterhin wird eine kompakte Bauform des Stators angestrebt.

Diese Aufgabe wird erfindungsgemäß dadurch gelöst, dass die einander zugeordneten Wicklungskontaktelemente und die Leiterbrücken ein einteiliges Verschaltungselement in Form eines Ringsegmentes bilden, in welcher n, n = 2, 3..., Wicklungskontaktelemente durch (n-1) teilkreisförmig gebogene Leiterbrücken verbunden sind und diese Verschaltungselemente axial nebeneinander auf der Stirnseite des Stators angeordnet sind.

Das Verschaltungselement umfasst vorteilhafterweise sowohl die Funktion einer Wicklungskontaktierung, als auch die einer die Wicklungskontakte elektrisch verbindenden Leiterbrücke. Die einstückige Ausführung reduziert die Anzahl der zu montierenden Teile und vereinfacht damit den Fertigungsablauf. Die Leiterbrücken der Verschaltungselemente stellen die Verbindung zwischen den einem bestimmten Wicklungsstrang zugeordneten Wicklungskontaktelementen her, wobei auf isolierende Zwischenschichten verzichtet werden kann.

Von besonderem Vorteil ist, dass das Verschaltungselement als Stanzbiegeteil geformt ist, wobei die Wicklungskontaktelemente mit einem radialen Versatz nach außen senkrecht zu der von den Leiterbrücken aufgespannten Fläche U-förmig mit zwei an die Leiterbrücken angrenzenden Seitenabschnitten und einem Verbindungsabschnitt ausgebildet sind. Diese erfindungsgemäße Formgebung ermöglicht eine kostengünstige Herstellung als einfaches einteiliges Stanzbiegeteil.

Als weiterer Vorteil zeigt sich, dass jedes ringförmige Verschaltungselement den gleichen Durchmesser aufweist und dass alle Leiterbrücken eines bestimmten Verschaltungselementes in gleicher Höhe, aber gegenüber den anderen Verschaltungselementen in unterschiedlicher Höhe, an den Seitenabschnitten der U-förmigen Wicklungskontaktelemente ausgestanzt sind. Durch diese Ausgestaltung können die Verschaltungselemente sehr kompakt nebeneinanderliegend angeordnet werden. Auf vertiefte Führungen in der Kunststoffumkleidung und auf Aussparungen in den Leitungsbrücken kann verzichtet werden.

Erfindungsgemäß weist das U-förmige Wicklungskontaktelement an dem Verbindungsabschnitt einen radial nach außen weisenden Kontakthaken mit einer gegenüberliegenden Kontaktlasche auf, über den ein Wickeldraht der Statorwicklung geführt ist. Nach Einsetzen der Verschaltungselemente mit ihren geformten Wicklungskontaktelementen können die Statorspulen in einem kontinuierlichen Wicklungsvorgang entsprechend der Reihenfolge ihrer räumlichen Anordnung gewickelt werden. Der Wickeldraht wird unterbrechungsfrei zwischen zwei Statorspulen über den Kontakthaken der Wicklungskontaktelemente geleitet. Die Steuerung des Wickelvorgangs vereinfacht sich dadurch erheblich. Zudem ergibt sich gegenüber parallel und radial übereinander gewickelten Spulen ein gleichmäßigerer Strombelag, da außenliegende Einzelwicklungen mit größerem Spulendurchmesser und damit längeren Strompfaden nicht vorgesehen sind.

Weitere zweckmäßige Ausgestaltungsmerkmale werden an Hand eines bevorzugten durch Zeichnungen veranschaulichten Ausführungsbeispiels erläutert. Dabei zeigen:
- Fig. 1: einen erfindungsgemäßen unbewickelten Stator ohne Verschaltungselemente,
- Fig. 2: ein erfindungsgemäßes Verschaltungselement,
- Fig. 3: den Stator mit Verschaltungselementen,
- Fig. 4 a bis Fig. 6 b: Montagefolge des Stators mit Detailansichten zur Positionsbestimmung der Verschaltungselemente,
- Fig. 7: den Stator mit eingesetzten Verschaltungselementen und montierter Leiterplatte,
- Fig. 8a: Schaltbild der Bewicklung und
- Fig. 8b: ein Bewicklungsschema des Stators.

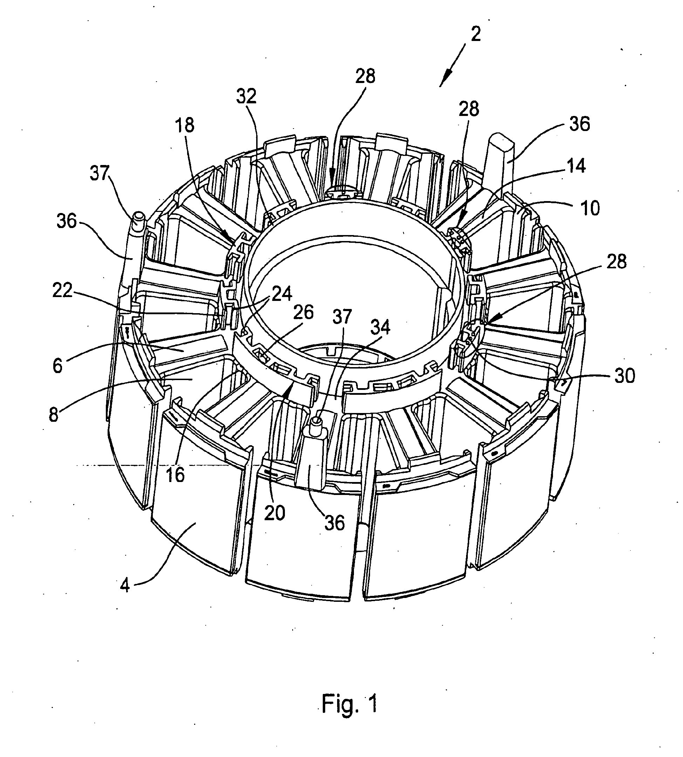

Fig. 1 zeigt einen erfindungsgemäßen Stator 2 in perspektivischer Darstellung. In dem bevorzugten Ausführungsbeispiel weist der Stator ein Blechpaket 4 mit zwölf Statorzähnen 6 und zwölf Statornuten 8 auf, das von einer Kunststoffumspritzung 10 umgeben ist. Es sei darauf hingewiesen, dass die Erfindung nicht auf die Anzahl von zwölf Statorzähnen und ―nuten beschränkt ist und analog mit beispielsweise neun Statorzähnen und ―nuten ausführbar ist.

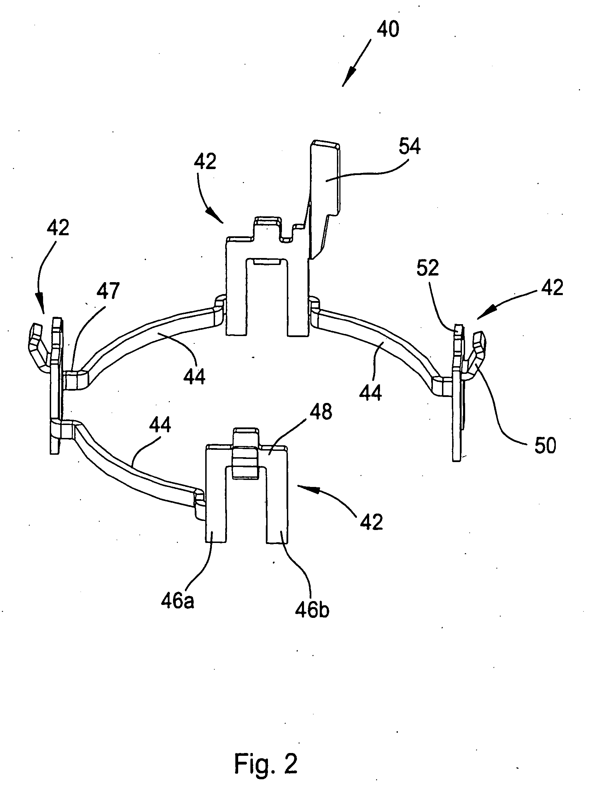

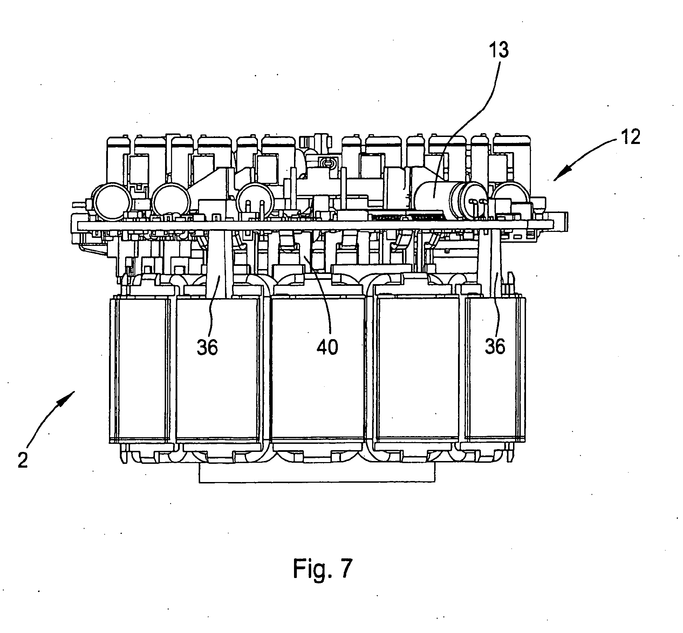

Auf einer einer Leiterplatte 12 (siehe Fig. 7) zugewandten Stirnseite 14 der Kunststoffumspritzung 10 sind über dem Nutgrund 16 jeder Statornut 8 Einsteckführungen 18, 20 zur Aufnahme von Wicklungskontaktelementen 42 (siehe Fig. 2) geformt. Die Einsteckführungen 18, 20 weisen eine radial nach außen zeigende Umfangswandung 22 und zwei axial verlaufende, in Umfangsrichtung voneinander wegweisende Nuten 24 auf, in die die Wicklungskontaktelemente 42 eingesetzt werden. Die Einsteckführungen 18, 20 können als Einzeleinsteckführung 18 über nur einem Nutgrund oder als Doppeleinsteckführung 20 ausgeführt sein. Die Doppeleinsteckführung 20 erstreckt sich über zwei benachbarte Nutgründe mit außenliegenden Nuten 24 und innenliegenden Taschen 26.

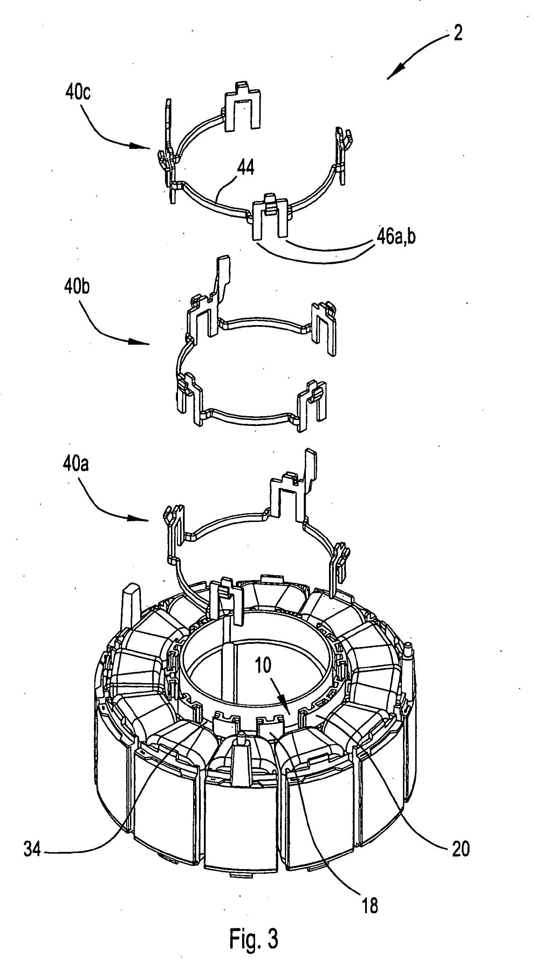

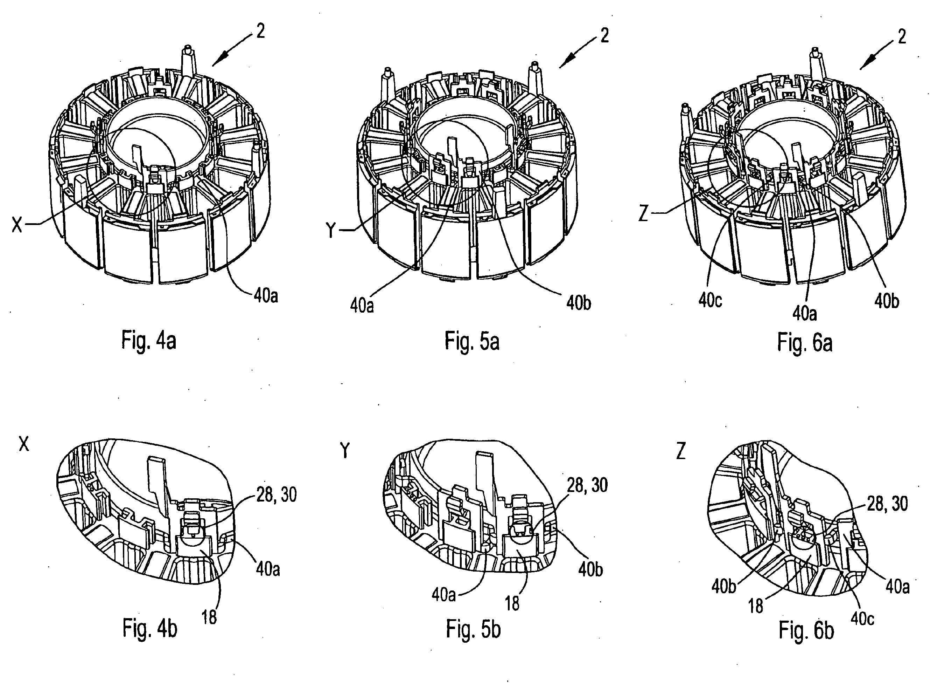

Eine der Anzahl der Verschaltungselemente entsprechende Anzahl von Einsteckführungen 18, 20 ist mit einem Kennzeichen 28 versehen, um die Positionierung der Verschaltungselemente 40 in Umfangsrichtung festzulegen. In dem bevorzugten Ausführungsbeispiel kommen drei Verschaltungselemente 40, bezeichnet als 40 a, 40 b, 40 c zum Einsatz (siehe Fig. 3), daher weisen drei Einsteckführungen 18, 20 ein Kennzeichen 28 auf, das jeweils einem der Verschaltungselemente 40 a, 40 b, 40 c zugeordnet ist und dessen Einbauposition bestimmt. Die Kennzeichen 28 sind als kleine Zapfen 30 auf der Stirnseite der Umfangswandung 22 der Einsteckführung 18, 20 ausgeführt und unterscheiden sich in der Anzahl der Zapfen 30. Die Zuordnung zu den Verschaltungselementen 40 und die Montagefolge wird weiter unten in den Fig. 4 bis 6 beschrieben.

Weiterhin weist die mit den Einsteckführungen 18, 20 versehene Stirnseite 14 der Kunststoffumspritzung 10 einen die Statorbohrung umfassenden Ringkragen 32 auf. Dieser bildet mit den innenliegenden Wandungen der Einsteckführungen 18, 20 abschnittsweise eine umlaufende Nut 34 zur Aufnahme der teilkreisförmig gebogenen Leiterbrücken 44. Zudem verleiht der Ringkragen 32 der Kunststoffumspritzung 10 Stabilität.

Die mit den Einsteckführungen 18, 20 versehene Stirnseite 14 der Kunststoffumspritzung 10 besitzt zudem an ihrem Außenradius drei axial abragende Stützelemente 36 zur Halterung der Leiterplatte 12. Die drei Stützelemente 36 liegen umfänglich um 120 °, 150 ° und 90 ° auseinander. An den Enden der beiden um 90 ° auseinander liegenden Stützelemente 36 sind zusätzlich Zapfen 37 in axialer Richtung geformt, um die Leiterplatte zu fixieren.

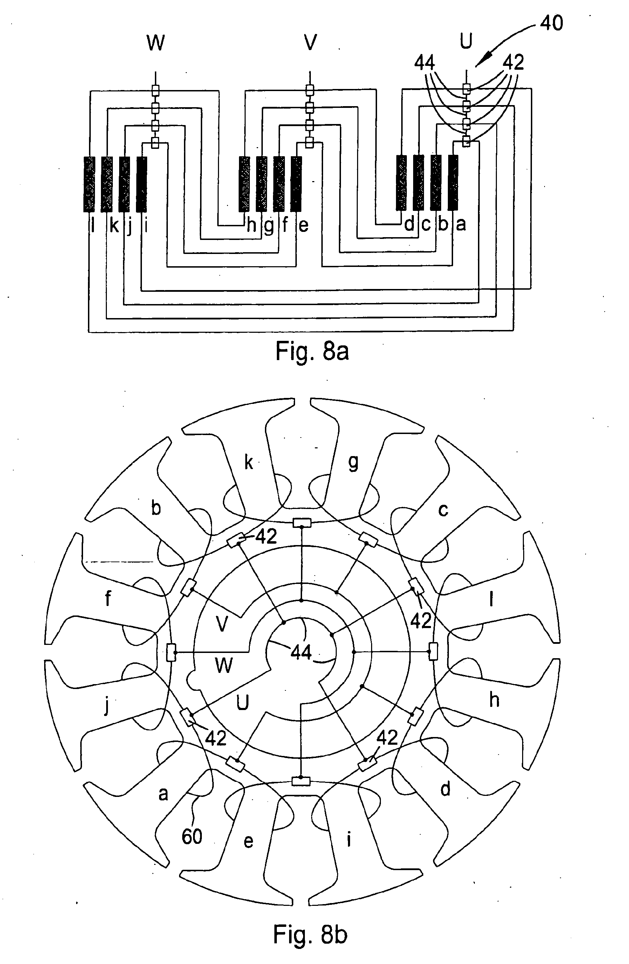

Fig. 2 zeigt ein erfindungsgemäßes Verschaltungselement 40 für die beschriebene bevorzugte Statorausführung mit je vier Statorspulen a bis d, e bis h, i bis I pro Wicklungsstrang U, V, W (siehe Fig. 8). Das Verschaltungselement 40 setzt sich aus vier Wicklungskontaktelementen 42 zusammen, die über drei teilkreisförmig gebogene Leiterbrücken 44 elektrisch miteinander verbunden sind, so dass sich eine offene ringförmige Struktur ausbildet.

Die Wicklungskontaktelemente 42 sind U-förmig mit Seitenabschnitten 46 a, 46 b und einem Verbindungsabschnitt 48 ausgebildet. Die Seitenabschnitte 46 a, 46 b sind mit einem radialen Versatz 47 nach außen, senkrecht auf der durch die Leiterbrücken 44 aufgespannten Fläche stehend, an die Leiterbrücken 44 angeformt. An dem Verbindungsabschnitt 48 ist radial nach außen weisend ein Kontakthaken 50 ausgebildet, der, nachdem ein Wickeldraht über den Kontakthaken 50 geführt ist, gegen eine aus dem Verbindungsabschnitt 48 axial herausragende Kontaktlasche 52 gebogen und verlötet bzw. verschweißt werden kann.

Jeweils eines der Wicklungskontaktelemente 42 eines jeden Verschaltungselementes 40 weist an seinem Verbindungsabschnitt 48 ein axial abragendes Anschlusselement 54 auf. Dieses dient der Kontaktierung des Wicklungsstrangs mit der darüber installierten Leiterplatte 12 (siehe Fig. 7).

Das erfindungsgemäße Verschaltungselement 40 kann kostengünstig als Stanzbiegeteil hergestellt werden.

Fig. 3 zeigt für den erfindungsgemäßen Stator 2 die Anordnung der drei Verschaltungselemente 40 a, 40 b, 40 c vor dem Zusammenfügen in der Kunststoffumspritzung 10 des Stators 2. Da die drei Verschaltungselemente 40 a, 40 b, 40 c jeweils als offene Ringstruktur mit gleichem Durchmesser ausgebildet sind, sind die Leiterbrücken 44 für ein bestimmtes Verschaltungselement 40 in gleicher Höhe, aber gegenüber den anderen Verschaltungselementen 40 axial versetzt, an den Seitenabschnitten 46 a, 46 b der Wicklungskontaktelemente 42 ausgeformt. Diese Ausgestaltung ermöglicht eine nebeneinanderliegende Anordnung aller Verschaltungselemente 40, wobei dasjenige Verschaltungselement 40, dessen Leiterbrücken 44 am Endbereich der Seitenabschnitte 46 a, 46 b angeformt sind, also das Verschaltungselement 40 a, zuerst in die Einstecköffnungen 18, 20 und in die umlaufende Nut 34 eingesetzt wird. Als zweites Verschaltungselement 40 b wird mit einem Versatz in Umfangsrichtung dasjenige Verschaltungselement 40 eingesetzt, dessen Leiterbrücken 44 im mittleren Bereich der Seitenabschnitte 46 a, 46 b angeformt sind und damit über den Leiterbrücken 44 des Verschaltungselementes 40 a zu liegen kommen. Analog, wiederum umfänglich versetzt, folgt das dritte Verschaltungselement 40 c, dessen Leiterbrücken 44 unmittelbar über denen des Verschaltungselementes 40 b angeordnet werden.

Die Fig. 4 bis 6 stellen die Montagefolge des Stators 2 mit Detailansichten zur Positionierung der Verschaltungselemente 40 dar. In einem ersten Schritt (Fig. 4 a und 4 b) wird das erste Verschaltungselement 40 a mit dem Wicklungskontaktelement 42, das ein Anschlusselement 54 aufweist, in diejenige Einsteckführung 18, 20 eingeschoben, deren Umfangswandung 22 stirnseitig als Kennzeichen 28 einen Zapfen 30 aufweist. Das zweite und dritte Verschaltungselement 40 a und 40 b werden analog in denjenigen Positionen fixiert, die durch zwei bzw. drei Zapfen auf der Stirnseite der Umfangswandung 22 gekennzeichnet sind (Fig. 5 a und 5 b sowie 6 a und 6 b). Es entsteht eine in Umfangsrichtung verschachtelte Anordnung der zusammengeschalteten Wicklungskontaktelemente 42 mit einer nebeneinanderliegenden Anordnung der Leiterbrücken 44. Die Kennzeichen 28 sind in Bezug auf den Statorumfang derart angeordnet, dass in Verbindung mit den Verschaltungselementen 40 a, 40 b, 40 c die Statorspulen a bis d, e bis h, i bis l des entsprechenden Wicklungsstrangs U, V, W gemäß der Vorschrift in Fig. 8 miteinander verschaltet werden.

Fig. 7 zeigt den Stator 2 mit vollständig eingesetzten Verschaltungselementen 40 und montierter, mit Bauelementen 13 bestückten Leiterplatte 12. Die Leiterplatte 12 liegt über den Verschaltungselementen 40 auf den Stützelementen 36 auf und bildet zusammen mit dem erfindungsgemäßen Stator 2 eine vorteilhaft kompakte Baueinheit.

Fig. 8 a zeigt ein Schaltbild der Bewicklung des erfindungsgemäßen Stators 2. Die drei Wicklungsstränge U, V, W sind in Dreieck geschaltet und bestehen aus jeweils vier Statorspulen a bis d, e bis h, i bis l. Die Kontaktierung der einem bestimmten Wicklungsstrang U, V, W zugeordneten Statorspulen a bis d, e bis h, i bis l erfolgt über die Wicklungskontaktelemente 42 mit den Leiterbrücken 44, wobei die Zusammenschaltung aus jeweils vier Wicklungskontaktelementen 42 einem erfindungsgemäßen Verschaltungselement 40 entspricht.

In Fig. 8b ist ein Bewicklungsschema des Stators dargestellt. Die Wicklung besteht aus einem zusammenhängenden Wickeldraht 60 aus dem in der Reihenfolge ihrer räumlichen Anordnung nacheinander in Umfangsrichtung die Statorspulen a bis l gewickelt werden. Die vier Statorspulen a bis d, e bis h, i bis l des entsprechenden Wicklungsstranges U, V, W sind jeweils räumlich um 90 ° zueinander versetzt auf dem Statorumfang angeordnet und gemäß der Dreieckschaltung aus Fig. 8 a durch die Verschaltungselemente 42 miteinander verschaltet. Zwischen den Statorspulen a bis l wird der Wickeldraht 60 zusammenhängend über die Wicklungskontaktelemente 42 geführt.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Stator (2) eines Elektromotors, insbesondere eines Außenläufermotors, mit einer aus einer Anzahl von Statorspulen (a bis I) gebildeten ein- oder mehrsträngigen Statorwicklung und einer an einer Stirnseite (14) des Stators (2) angebrachten Verschaltungsanordnung mit über Leiterbrücken (44) verbundenen, jeweils einem Wicklungsstrang (U, V, W) zugeordneten Wicklungskontaktelementen (42), die zwischen den Statorspulen (a bis I) die Statorwicklung kontaktieren, wobei die einander zugeordneten Wicklungskontaktelemente (42) und die Leiterbrücken (44) ein einteiliges Verschaltungselement (40) in Form eines Ringsegments bilden, in welcher n, n = 2, 3..., Wicklungskontaktelemente (42) durch (n-1) teilkreisförmig gebogene Leiterbrücken (44) verbunden sind und diese Verschaltungselemente (40) axial nebeneinander auf der Stirnseite (14) des Stators (2) angeordnet sind, wobei das Verschaltungselement (40) als Stanzbiegeteil geformt ist, wobei die Wicklungskontaktelemente (42) über dem Nutgrund (16) der Statomut (8) positioniert werden und mit einem radialen Versatz (47) nach außen senkrecht zu der von den Leiterbrücken (44) aufgespannten Fläche U-förmig mit zwei an die Leiterbrücken (44) angrenzenden Seitenabschnitten (46a, 46b) und einem Verbindungsabschnitt (48) ausgebildet sind, wobei jedes ringsegmentförmige Verschaltungselement (40) den gleichen Durchmesser aufweist und dass alle Leiterbrücken (44) eines bestimmten Verschaltungselementes (40) in gleicher Höhe, aber gegenüber den anderen Verschaltungselementen (40) in unterschiedlicher Höhe, an den Seitenabschnitten (46a, 46b) der U-förmigen Wicklungskontaktelemente (42) ausgestanzt sind, so dass die Verschaltungselemente (40) axial nebeneinander anzuordnen sind und in Umfangsrichtung eine verschachtelte Anordnung der verschalteten Wicklungskontaktelemente (42) vorliegt, wobei die Verschaltungselemente (40) Wickelstützpunkte für das nachfolgende Aufbringen der Statorwicklung (60) auf die Statorspulen (a bis ℓ) bilden.

2. Stator (2) nach Anspruch 1,
**dadurch gekennzeichnet, dass** das Verschaltungselement (40) als Stanzbiegeteil geformt ist, wobei die Wicklungskontaktelemente (42) mit einem radialen Versatz (47) nach außen senkrecht zu der von den Leiterbrücken (44) aufgespannten Fläche U-förmig mit zwei an die Leiterbrücken (44) angrenzenden Seitenabschnitten (46a, 46b) und einem Verbindungsabschnitt (48) ausgebildet sind.

3. Stator (2) nach einem der Ansprüche 1 oder 2,
**dadurch gekennzeichnet, dass** jedes ringsegmentförmige Verschaltungselement (40) den gleichen Durchmesser aufweist und dass alle Leiterbrücken (44) eines bestimmten Verschaltungselementes (40) in gleicher Höhe, aber gegenüber den anderen Verschaltungselementen (40) in unterschiedlicher Höhe, an den Seitenabschnitten (46a, 46b) der U-förmigen Wicklungskontaktelemente (42) ausgestanzt sind, so dass die Verschaltungselemente (40) axial nebeneinander anzuordnen sind.

4. Stator (2) nach Anspruch 1 bis 3,
**dadurch gekennzeichnet, dass** das U-förmige Wicklungskontaktelement (42) an dem Verbindungsabschnitt (48) einen radial nach außen weisenden Kontakthaken (50) mit einer gegenüberliegenden Kontaktlasche (52) aufweist, über den ein Wickeldraht (60) der Statorwicklung geführt ist.

5. Stator (2) nach einem der Ansprüche 1 bis 4,
**dadurch gekennzeichnet, dass** jeweils eines der einem Verschaltungselement (40) zugeordneten Wicklungskontaktelemente (42) an seinem Verbindungsabschnitt 48) ein axial abragendes Anschlusselement (54) zur elektrischen Kontaktierung von externen Anschlüssen, insbesondere einer Leiterplatte (12) aufweist.

6. Stator (2) nach einem der Ansprüche 1 bis 5,
**dadurch gekennzeichnet, dass** derStator(2)einBlechpaket(4) mit einer Anzahl von Statorzähnen (6) und Statornuten (8) zur Aufnahme der Statorspulen (a bis I) aufweist.

7. Stator (2) nach einem der Ansprüche 1 bis 6,
**dadurch gekennzeichnet, dass** dasBlechpaket(4)anbeiden Stirnseiten des Stators (2) und innerhalb der Statornuten (8) von einer Kunststoffumspritzung (10) umgeben ist.

8. Stator (2) nach einem der Ansprüche 1 bis 7,
**dadurch gekennzeichnet, dass** aufeinereinerLeiterplatte(12) zugewandten Stirnseite (14) der Kunststoffumspritzung (10) in einem Bereich über dem Nutgrund (16) jeder Statornut (8) eine Einsteckführung (18) zur Aufnahme der Wicklungskontaktelemente (42) axial herausgeformt ist.

9. Stator (2) nach einem der Ansprüche 1 bis 8,
**dadurch gekennzeichnet, dass** dieEinsteckführung(18)eine radial nach außen zeigende Umfangswandung (22) und zwei axial verlaufende in Umfangsrichtung voneinander wegweisende Nuten (24) aufweist, in die die Seitenabschnitte (46a, 46b) der Wicklungskontaktelemente (42) eingesetzt werden.

10. Stator (2) nach einem der Ansprüche 1 bis 9,
**dadurch gekennzeichnet, dass** zwei benachbarte Einsteckführungen (18) als zusammenhängende Doppeleinsteckführung (20) mit innenliegender Tasche (26) und außenliegenden Nuten (24) ausgeführt sind.

11. Stator (2) nach einem der Ansprüche 1 bis 10,
**dadurch gekennzeichnet, dass** eine der Anzahl der Verschaltungselemente (42) entsprechende Anzahl der Einsteckführungen (18, 20) auf einer Stirnseite ihrer Umfangswandung (22) zur Positionierung der Verschaltungselemente (42) mit einem Kennzeichen (28) versehen ist, das genau einem Verschaltungselement (40) zugeordnet ist.

12. Stator (2) nach einem der Ansprüche 1 bis 11,
**dadurch gekennzeichnet, dass** dasKennzeichen(28)auseiner Anzahl von axial von der Stirnseite der Umfangswandung (22) der Einsteckführungen (18, 20) abragenden Zapfen (30) gebildet ist.

13. Stator (2) nach einem der Ansprüche 1 bis 12,
**dadurch gekennzeichnet, dass** diemitdenEinsteckführungen (18, 20) versehene Stirnseite (14) der Kunststoffumspritzung (10) mit einem die Statorbohrung umfassenden Ringkragen (32) derart versehen ist, dass im Bereich der Einsteckführungen (18, 20) und dem weiter innen liegenden Ringkragen (32) abschnittsweise eine umlaufende Nut (34) zur Aufnahme der teilkreisförmig gebogenen Leiterbrücken (44) gebildet wird.

14. Stator (2) nach einem der Ansprüche 1 bis 13,
**dadurch gekennzeichnet, dass** die mit den Einsteckführungen (18, 20) versehene Stirnseite (14) der Kunststoffumspritzung (10) an ihrem Außenradius mit axial abragenden Stützelementen (36) versehen ist, von denen eine Auswahl an ihrem Ende Zapfen (37) aufweisen.

15. Stator (2) nach einem der Ansprüche 1 bis 14,
**dadurch gekennzeichnet, dass** sich zwischen den Leiterbrücken (44) der einzelnen Verschaltungselemente (40) keine isolierende Zwischenschichten befinden, sondern die Isolierung durch einen Luftspalt zwischen den Leiterbrücken (44) erreicht wird.

## Claims

1. Stator (2) of an electric motor, in particular of an external rotor motor, with a single or multiple-strand stator winding which is formed by a number of stator coils (a to 1) and a wiring arrangement which is mounted on a front side (14) of the stator (2) and is provided with winding contact elements (42) which are connected by means of conducting bridge-pieces (44) and are respectively associated with a winding strand (U, V, W) and which bond the stator winding between the stator coils (a to 1), the mutually associated winding contact elements (42) and the conducting bridge-pieces (44) forming a single-piece wiring element (40) in the form of a ring segment in which n (where n = 2, 3, etc.) winding contact elements (42) are connected by means of (n-1) conducting bridge-pieces (44) bent in partly circular form and these wiring elements (40) are arranged axially next to each on the front side (14) of the stator (2), the wiring element (40) being formed as a punch-bent part, the winding contact elements (42) being positioned above the groove bottom (16) of the stator groove (8) and with a part (47) radially offset outwards perpendicular to the surface defined by the conducting bridge-pieces (44) being formed U-shaped with two side sections (46a, 46b) adjacent to the conducting bridge-pieces (44) and a connecting section (48), each wiring element (40) in the form of a ring segment having the same diameter and all the conducting bridge-pieces (44) of a given wiring element (40) being punched out on the side sections (46a, 46b) of the U-shaped winding contact elements (42) at the same height, but at a different height with respect to the other wiring elements (40) so that the wiring elements (40) can be arranged axially next to each other and a nested arrangement of the wired winding contact elements (42) is present in the circumferential direction, the wiring elements (40) forming winding support points for the subsequent mounting of the stator winding (60) onto the stator coils (a to 1).

2. Stator (2) according to Claim 1, **characterized in that** the wiring element (40) is formed as a punched bent part, the winding contact elements (42) with a part (47) radially offset outwards perpendicular to the surface defined by the conducting bridge-pieces (44) being formed U-shaped with two side sections (46a, 46b) adjacent to the conducting bridge-pieces (44) and a connecting section (48).

3. Stator (2) according to Claim 1 or 2, **characterized in that** each wiring element (40) in the form of a ring segment has the same diameter and all the conducting bridge-pieces (44) of a given wiring element (40) are punched out on the side sections (46a, 46b) of the U-shaped winding contact elements (42) at the same height, but at a different height with respect to the other wiring elements (40) so that the wiring elements (40) can be arranged axially next to each other.

4. Stator (2) according to Claims 1 to 3, **characterized in that** the U-shaped winding contact element (42) has on the connecting section (48) a contact hook (50) which is directed radially outwards and has an oppositely situated contact lug (52) and over which a winding wire (60) of the stator winding is guided.

5. Stator (2) according to Claims 1 to 4, **characterized in that** in each case a winding contact element (42) associated with a wiring element (40) has on its connecting section (48) an axially projecting connecting element (54) for the electrical bonding of external connections, in particular of a printed circuit board (12).

6. Stator (2) according to one of Claims 1 to 5, **characterized in that** the stator (2) has a set of laminations (4) with a number of stator teeth (6) and stator grooves (8) for receiving the stator coils (a to 1).

7. Stator (2) according to one of Claims 1 to 6, **characterized in that** the set of laminations (4) is surrounded on both the front sides of the stator (2) and within the stator grooves (8) by a plastic overmoulding (10).

8. Stator (2) according to one of Claims 1 to 7, **characterized in that** an insertion guide (18) for receiving the winding contact elements (42) is axially formed in a front side (14) of the plastic overmoulding (10) facing a printed circuit board (12), in a region above the groove bottom (16) of each stator groove (8).

9. Stator (2) according to one of Claims 1 to 8, **characterized in that** the insertion guide (18) has a circumferential wall (22) facing radially outwards and two axially extending grooves (24) which are directed away from each other in the circumferential direction and into which the side sections (46a, 46b) of the winding contact elements (42) are inserted.

10. Stator (2) according to one of Claims 1 to 9, **characterized in that** two adjacent insertion guides (18) are formed as a combined double insertion guide (20) with inner-lying pocket (26) and outer-lying grooves (24).

11. Stator (2) according to one of Claims 1 to 10, **characterized in that** a number of the insertion guides (18, 20) corresponding to the number of wiring elements (42) are provided on a front side of their circumferential wall (22) with a marking (28) for positioning the wiring elements (42), which is associated precisely with a wiring element (40).

12. Stator (2) according to one of Claims 1 to 11, **characterized in that** the marking (28) is formed by a number of pins (30) projecting axially from the front side of the circumferential wall (22) of the insertion guides (18, 20).

13. Stator (2) according to one of Claims 1 to 12, **characterized in that** the front side (14) of the plastic overmoulding (10) provided with the insertion guides (18, 20) is provided with an annular collar (32) surrounding the stator bore in such a way that in the region of the insertion guides (18, 20) and the further inner-lying annular collar (32), along sections, a surrounding groove (34) for receiving the conducting bridge-pieces (44) which are bent in partly circular form is formed.

14. Stator (2) according to one of Claims 1 to 13, **characterized in that** the front side (14) of the plastic overmoulding (10) provided with the insertion guides (18, 20) is provided on its outer radius with axially projecting supporting elements (36), selected ones of which have pins (37) on their end.

15. Stator (2) according to one of Claims 1 to 14, **characterized in that** no insulating intermediate layers are situated between the conducting bridge-pieces (44) of the individual wiring elements (40), but the insulation is achieved by means of an air gap between the conducting bridge-pieces (44).

## Revendications

1. Stator (2) d'un moteur électrique, en particulier d'un moteur à rotor externe, comprenant un enroulement de stator monobrin ou multibrin, formé par un certain nombre de bobines de stator (a à 1), et un dispositif d'interconnexion placé sur un côté avant (14) du stator (2) avec des éléments de contact d'enroulement (42) reliés par des ponts conducteurs (44), attribués chacun à un brin d'enroulement (U, V, W), lesquels éléments établissent un contact avec l'enroulement de stator entre les bobines de stator (a à 1), les éléments de contact d'enroulement (42) attribués les uns aux autres et les ponts conducteurs (44) formant un élément d'interconnexion (40) d'une seule pièce sous forme d'un segment annulaire, dispositif dans lequel n, n = 2, 3..., éléments de contact d'enroulement (42) sont reliés par (n-1) ponts conducteurs (44) pliés en forme de cercle partiel et ces éléments d'interconnexion (40) sont disposés axialement les uns à côté des autres sur le côté avant (14) du stator (2), l'élément d'interconnexion (40) étant formé sous forme de pièce découpée et cintrée, les éléments de contact d'enroulement (42) étant positionnés au-dessus du fond de rainure (16) de la rainure de stator (8) et étant conçus avec un décalage (47) radial vers l'extérieur perpendiculairement à la surface sous-tendue par les ponts conducteurs (44) en forme de U avec deux parties latérales (46a, 46b) adjacentes aux ponts conducteurs (44) et une partie de liaison (48), chaque élément d'interconnexion (40) en forme de segment annulaire présentant le même diamètre et tous les ponts conducteurs (44) d'un élément d'interconnexion (40) défini étant découpés à la même hauteur, mais à une hauteur différente par rapport aux autres éléments d'interconnexion (40), sur les parties latérales (46a, 46b) des éléments de contact d'enroulement (42) en forme de U, de sorte que les éléments d'interconnexion (40) doivent être disposés axialement les uns à côté des autres et qu'un agencement imbriqué des éléments de contact d'enroulement (42) interconnectés est présent dans le sens périphérique, les éléments d'interconnexion (40) formant des points de support d'enroulement pour l'application consécutive de l'enroulement de stator (60) sur les bobines de stator (a à 1).

2. Stator (2) selon la revendication 1,
**caractérisé en ce que** l'élément d'interconnexion (40) est formé sous forme de pièce découpée et cintrée, les éléments de contact d'enroulement (42) étant formés avec un décalage (47) radial vers l'extérieur, perpendiculairement à la surface sous-tendue par les ponts conducteurs (44) en forme de U avec deux parties latérales (46a, 46b), adjacentes aux ponts conducteurs (44) et une partie de liaison (48).

3. Stator (2) selon l'une quelconque des revendications 1 ou 2,
**caractérisé en ce que** chaque élément d'interconnexion (40) en forme de segment annulaire présente le même diamètre et **en ce que** tous les ponts conducteurs (44) d'un élément d'interconnexion (40) défini sont découpés à la même hauteur, mais à une hauteur différente par rapport aux autres éléments d'interconnexion (40), sur les parties latérales (46a, 46b) des éléments de contact d'enroulement (42) en forme de U, de telle sorte que les éléments d'interconnexion (40) doivent être disposés axialement les uns à côté des autres.

4. Stator (2) selon les revendications 1 à 3,
**caractérisé en ce que** l'élément de contact d'enroulement (42) en forme de U présente sur la partie de liaison (48) un crochet de contact (50) dirigé radialement vers l'extérieur avec une patte de contact (52) opposée, crochet par lequel un fil d'enroulement (60) de l'enroulement de stator est guidé.

5. Stator (2) selon l'une quelconque des revendications 1 à 4,
**caractérisé en ce qu'**à chaque fois l'un des éléments de contact d'enroulement (42) attribués à un élément d'interconnexion (40) présente sur sa partie de liaison (48) un élément de raccordement (54) dépassant axialement pour la mise en contact électrique de branchements externes, en particulier d'une plaque de circuit imprimé (12).

6. Stator (2) selon l'une quelconque des revendications 1 à 5,
**caractérisé en ce que** le stator (2) présente un paquet de tôle (4) avec un certain nombre de dents de stator (6) et de rainures de stator (8) pour le logement des bobines de stator (a à 1).

7. Stator (2) selon l'une quelconque des revendications 1 à 6,
**caractérisé en ce que** le paquet de tôle (4) est entouré d'un enrobage de plastique (10) sur les deux côtés avant du stator (2) et à l'intérieur des rainures de stator (8).

8. Stator (2) selon l'une quelconque des revendications 1 à 7,
**caractérisé en ce qu'**un guide d'enfichage (18) pour le logement des éléments de contact d'enroulement (42) est formé axialement sur un côté avant (14), associé à une plaque de circuit imprimé (12), de l'enrobage en plastique (10) dans une zone située au-dessous du fond de rainure (16) de chaque rainure de stator (8).

9. Stator (2) selon l'une quelconque des revendications 1 à 8,
**caractérisé en ce que** le guide d'enfichage (18) présente une paroi périphérique (22) dirigée radialement vers l'extérieur et deux rainures (24) agencées axialement et partant l'une de l'autre dans le sens périphérique, dans lesquelles les parties latérales (46a, 46b) des éléments de contact d'enroulement (42) sont insérées.

10. Stator (2) selon l'une quelconque des revendications 1 à 9,
**caractérisé en ce que** deux guides d'enfichage (18) voisins sont réalisés sous forme de guide à double enfichage (20) cohérent avec une poche (26) intérieure et des rainures (24) extérieures.

11. Stator (2) selon l'une quelconque des revendications 1 à 10,
**caractérisé en ce qu'**un certain nombre, correspondant au nombre des éléments d'interconnexion (42), des guides d'enfichage (18, 20) est doté sur un côté avant de sa paroi périphérique (22) pour le positionnement des éléments d'interconnexion (42) d'une caractéristique (28) qui est attribuée exactement à un élément d'interconnexion (40).

12. Stator (2) selon l'une quelconque des revendications 1 à 11,
**caractérisé en ce que** la caractéristique (28) est formée d'un certain nombre de tenons (30) dépassant axialement du côté avant de la paroi périphérique (22) des guides d'enfichage (18, 20).

13. Stator (2) selon l'une quelconque des revendications 1 à 12,
**caractérisé en ce que** le côté avant (14) de l'enrobage plastique (10), doté des guides d'enfichage (18, 20), est doté d'une collerette annulaire (32) entourant l'alésage de stator de telle sorte que, par endroits, une rainure (34) périphérique pour le logement des ponts conducteurs (44) pliés en forme de circuit partiel est formée dans la zone des guides d'enfichage (18, 20) et la collerette annulaire (32) est située davantage à l'intérieur.

14. Stator (2) selon l'une quelconque des revendications 1 à 13,
**caractérisé en ce que** le côté avant (14) de l'enrobage plastique (10), doté des guides d'enfichage (18, 20), est doté sur son rayon extérieur d'éléments de soutien (36) dépassant axialement, éléments dont une sélection est présentée par des tenons (37) sur leur extrémité.

15. Stator (2) selon l'une quelconque des revendications 1 à 14,
**caractérisé en ce qu'**aucune couche intermédiaire isolante ne se trouve entre les ponts conducteurs (44) des différents éléments d'interconnexion (40), mais l'isolation est obtenue par une fente d'aération entre les ponts conducteurs (44).
